# EUROPEAN PATENT SPECIFICATION

(11) **EP 1 191 272 B1**
(45) Date of publication and mention of the grant of the patent: **16.03.2005**
(21) Application number: 00128427.2
(22) Date of filing: 28.12.2000
(51) Int. Cl.: F16L 37/14

(54) **Quick coupling for hoses and pipelines with increased diffusion resistance**
Schnellkupplung mit erhöhtem Diffusionswiderstand für die Verbindung von Schlauch- und Rohrleitungen
Raccord rapide à résistance de diffusion accrue pour tuyaux flexibles et canalisations

(30) Priority: 28.12.1999 DE 19963368
(43) Date of publication of application: 27.03.2002
(73) Proprietor: ITT MANUFACTURING ENTERPRISES, INC., Wilmington, Delaware 19801 (US)
(72) Inventor: Vierneisel, Thomas, 64625 Bensheim (DE); Sausner, Andreas, 60529 Frankfurt (DE)
(74) Representative: Dreiss, Fuhlendorf, Steimle & Becker

(56) References cited:
- WO-A-98/48209
- US-A- 1 696 134
- US-A- 5 016 922
- US-A- 5 452 924
- US-A- 5 513 882
- US-A- 5 860 502

## Description

The invention is based on a quick coupling for hoses or pipelines borehole, with a plug-in nipple having a second passage borehole and with at least one sealing element located in according to the preamble of claim 1.

Hose couplings are known, for example, from the publications
- FR 2 172 310,
- US 1,696,134,
- DE 198 17 633 A1,
- US 2,441,344,
- US 2,021,745,
- AT 318 986,
- DE 43 04 241 A1,
- DE-GM 1 492 223 and
- US 5,452, 924 A.

Hoses or pipelines should be connected with each other rapidly and securely with the aid of known quick couplings. The fluid present in the hoses or pipelines, e.g., fuel, has to be prevented from going into the environment at the discharge. In the recent past it has also become required that the diffusion of the volatile constituents of the fluid be suppressed as much as possible. For this reason it is already conventional and prescribed by many pertinent industrial standards that two sealing elements arranged one behind the other be provided. It can be expected that the requirements on the diffusion resistance of quick couplings will increase in the future.

The invention proposes a quick coupling that can be produced simply and cost-favorably and with a further increased diffusion resistance and means for preventing an unintentional release of the coupling.

This is achieved by a quick coupling according to claim 1. In the coupled state of the quick coupling the sealing element is tensioned in the axial direction so that the contact surface between the first passage borehole and the sealing element or elements on the one hand and the plug-in device and the sealing element or elements on the other is enlarged. This enhanced contact surface results in the fact that with the same structural space the distance between the surface of the quick coupling and the sealing element or elements wetted with fluid and the environment is increased and thus the diffusion of the volatile constituents of the fluid is reduced. Another advantage of the quick coupling according to the invention is that the production costs versus known quick couplings are not higher or at least not significantly so.

A thrust piece is provided to be located between the sealing element and the plug-in nipple and for the thrust piece to transfer the tensioning force between the plug-in nipple and sealing element so that damage of the sealing element or elements by the plug-in nipple is reduced upon introduction into the coupling sleeve. Wear of the sealing element due to relative movement of the plug-in nipple to the sealing element is also reduced.

The plug-in nipple has a collar that interacts with the thrust piece in the transfer of the tensioning force so that the tensioning force is passed via the entire periphery of the plug-in nipple and the thrust piece into the latter and thus a canting or tilting is avoided.

It is provided in a further supplementation of the invention for the thrust piece to have a collar that interacts with an offset of the first passage borehole so that when the collar lies on the offset the tensioning force acting on the sealing element or elements is limited. Compressive deformation or other damage to the sealing element or elements is thus avoided.

The quick coupling has a locking element and the locking element has a means for interacting with the plug-in nipple or the thrust piece for creating the tensioning of the sealing element or elements, in particular, an inclined plane. The coupling and locking of the quick coupling according to the invention take place just as quickly and simply as with quick couplings according to the prior art and it is also reliably assured that the required tensioning of the sealing element is always present in the coupled and locked state.

In one embodiment of the invention the sealing element is an O-ring, so that its advantages such as simple assembly and rigidity can be used in the quick coupling according to the invention also.

In an embodiment according to the invention the sealing element has at least one peripheral groove on its outer surface and/or its inner surface so that the contact pressure between the sealing element on the one hand and the first passage borehole or plug-in nipple on the other is increased and the tightness of the quick coupling according to the invention is thus enhanced

It is provided in an additional refinement of the invention for the sealing element and the thrust piece to be made in one piece so that the number of structural components is reduced and the assembly of the quick coupling according to the invention is facilitated.

Another refinement of the quick coupling according to the invention provides for at least two sealing elements located one behind the other to be provided in the axial direction of the first passage borehole and for a thrust ring to be provided between each of the sealing elements so that the tightness and diffusion resistance of the quick coupling are further enhanced and it is assured by the thrust ring or rings that the sealing elements are not damaged.

In a variant according to the invention the sealing element is a four-lipped sealing ring or a multi-lipped sealing ring so that an increased tightness is obtained with an identical precompression, and with increasing internal pressure the contact pressure between sealing element and coupling sleeve and plug-in nipple is increased.

Additional advantages and advantageous embodiments of the invention are disclosed in the drawings, the following description and the patent claims.

Figure 1 shows an exemplary embodiment of a quick coupling according to the invention without locking element in an exploded representation.

Figure 2 shows a longitudinal section through a quick coupling with a sealing element; this Figure does not form part of the invention.

Figure 3 shows an exemplary embodiment for a sealing element according to the invention.

Figure 4 shows a quick coupling according to the invention in cross section.

Figure 5 shows a diagram relative to the course of the tensioning force.

And Figure 6 shows another exemplary coupling sleeve and locking element in cross section, which do not form part of the invention.

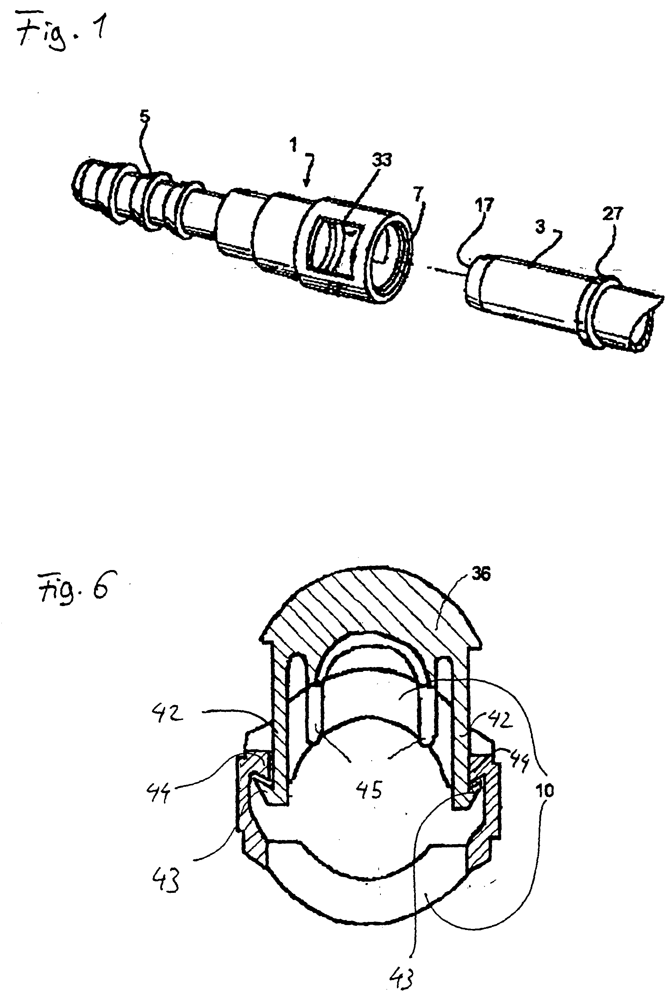

Figure 1 shows a coupling sleeve 1 and a plug-in nipple 3. The coupling sleeve 1 has at one end a retainer 5 for fastening a hose (not shown) or a pipeline (not shown). A recess 7 is located at the other end of the coupling sleeve 1. A plug-in nipple 3 can be introduced into the recess 7. At its end opposite the retainer 5 the coupling sleeve 1 has a cutout 33 into which a locking element (not shown in Figure 1) can be inserted.

The plug-in nipple 3 has a bevel on a front end 17 facing the coupling sleeve 1. A collar 27 is present on the plug-in nipple 3 at a certain axial distance from the front end 17. The interaction of the coupling sleeve 1 and the plug-in nipple 3 is elucidated on the basis of the figures described below.

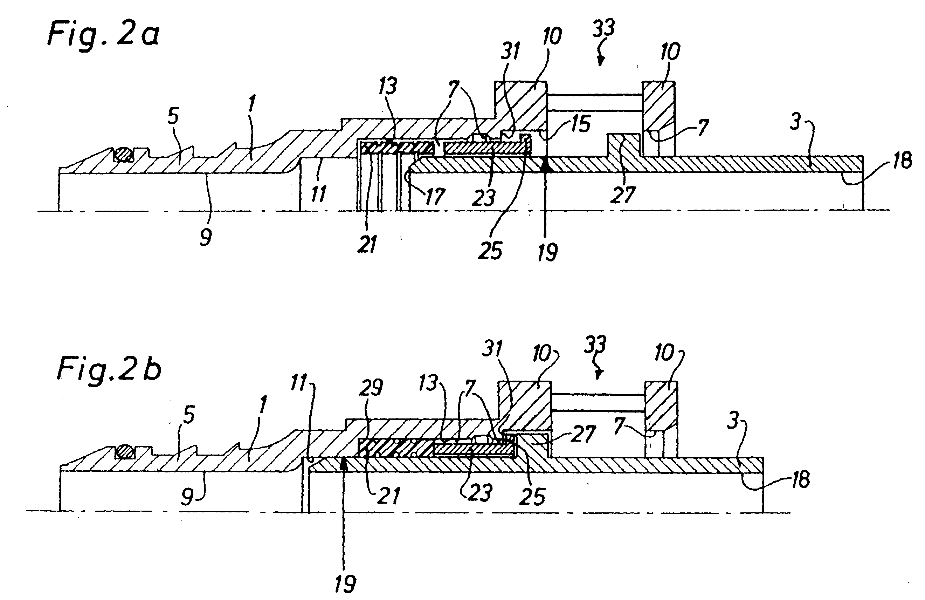

Figure 2a shows a coupling sleeve 1 and a plug-in nipple 3 in longitudinal section. The coupling sleeve 1 has a retainer 5 at one end for fastening a hose or a pipeline (not shown). A recess 7 is present at the other end of the coupling sleeve 1. The recess 7 has a first passage borehole 9, a first diameter 11, a second diameter 13 and a third diameter 15.

The plug-in nipple 3 has a second passage borehole 18. The front end 17 of the plug-in nipple 3 can be shoved into the coupling sleeve 1 up to the first diameter 11. A sealing element 21 is located between an outside diameter 19 of the plug-in nipple 3 and the second diameter 13 of the coupling sleeve 1. The sealing element 21 has an essentially rectangular cross section and consists of an elastic material that is resistant to the fluid present in the borehole 9.

A sleeve 23 is also located between diameter 19 and the second diameter 13; it has a collar 25 on its end facing away from the sealing element 21. The plug-in nipple 3 also has a collar 27, the outside diameter of which, as that of the collar 25, is dimensioned so that it fits into the section of the recess 7 that has the third diameter 15.

When the plug-in nipple 3 is shoved into the coupling sleeve 1, the collar 27 of the plug-in nipple 3, the sleeve 23 and the sealing element 21 are shoved together. In the position shown in Figure 2b the sealing element 21 is tensioned between the sleeve 23 and an offset 29 of the recess 7. This tensioning causes the inside and outside diameters of the sealing element 21 to increase so that a good sealing action occurs between the outside diameter 19 of the plug-in nipple and the second diameter 13 of the recess 7. The tensioning is limited by the collar 25 of the sleeve 23 as soon as the collar 25 lies on an offset 31 of the recess 7.

When the plug-in nipple 3 has assumed the position shown in Figure 2b, a locking element (not shown) is introduced into the cutout 33 of the coupling sleeve 1, and it acts on the collar 27 of the plug-in nipple 3 and prevents the plug-in nipple 3 from being pulled out of the coupling sleeve 1 by the tensioning of the sealing element 21. The locking element 33 is thus fixed in the axial direction relative to the coupling sleeve 1; the cutout 33 is limited in the axial direction of the coupling sleeve 1 by webs 10.

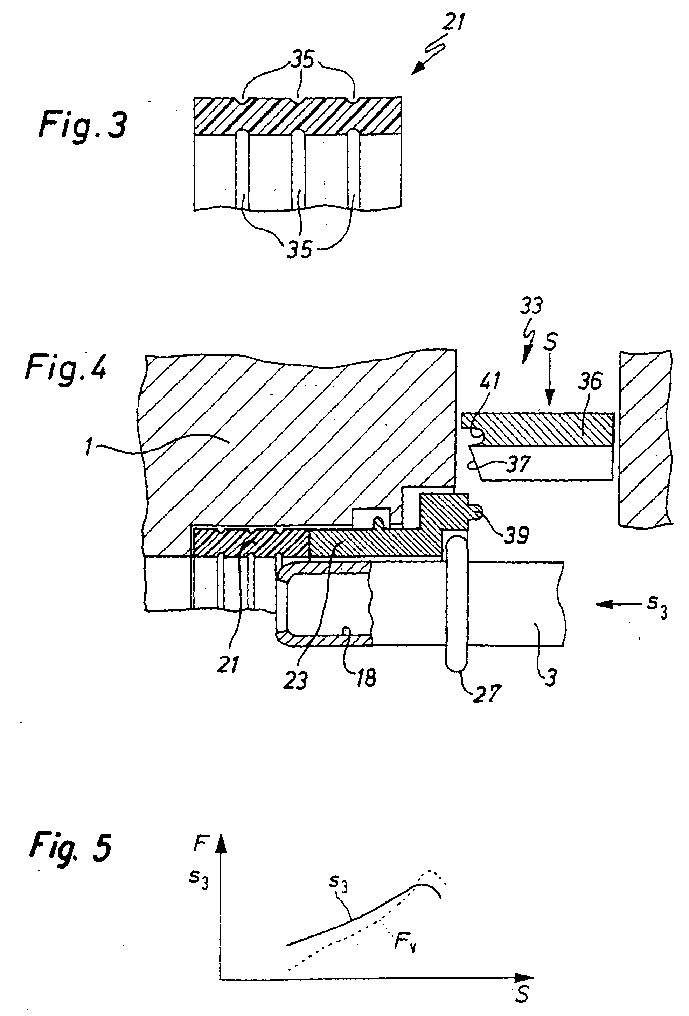

A partial section of a second exemplary embodiment of a sealing element 21 according to the invention is shown in Figure 3. The sealing element 21 has grooves 35 on its outer diameter and its inner diameter. The spring rigidity of the sealing element is reduced in the longitudinal direction by the grooves 35 and at the same time the contact pressure in the incorporated and tensioned state of the sealing element 21 is increased between the outside diameter 19 of the plug-in nipple and the second diameter 13 of the recess 7 and the sealing element 21. Alternatively, one or more four-lipped sealing rings, e.g., according to the U.S. Standard AS 568 A, can also be used. Four-lipped sealing rings have the advantages over O-rings that
- they do not tend to twist,
- they have a very good sealing behavior and
- there are no disturbing flash fins.

The quick coupling according to the invention is shown in Figure 4. A locking element 36 is depicted in the cutout 33 of the coupling sleeve 1; it has an inclined surface 37 on its end facing the sleeve 23. When the locking element 36 is moved in the direction of the arrow s in the cutout 33, the inclined surface 37 moves the sleeve 23 in the direction of the sealing element 21 and thus effects the tensioning of the latter. As soon as the locking element 36 has come into its end position, a circular elevation or lug 39 rests in a corresponding recess 41 of the locking element 36. The locking element 36 is thus fixed in its end position and the tensioning of the sealing element 21 is again reduced to some extent. The locking element 36 at the same time also assures the plug-in nipple 3 in its end position (not shown) against sliding out of the coupling sleeve 1 in that it effects a positive connection with the collar 27 of the plug-in nipple 3.

The axial position s₃ of the plug-in nipple 3 is plotted versus the position S of the locking element 36 in Figure 5. It is clearly evident in this diagram that the plug-in nipple 3 is moved in the direction of the sealing element 21 if the locking element 36 is moved in the direction of the arrow S (see Figure 4). It can also be seen that the plug-in nipple 3 is moved back slightly by the insertion of the lug 39 into the recess 41. In addition, the course of the tensioning force Fᵥ is plotted over the path S of the locking element 36 in Figure 5. It can also be detected in the course of the tensioning force Fᵥ that as soon as the lug 39 of the sleeve 23 rests in the recess 41 of the locking element 35, the tensioning force again decreases somewhat.

A coupling sleeve 1 and a locking element 36 in the inserted state are shown in cross section in Figure 6, which does not form part of the invention. The sectional plane runs through the cutout 33 (see Figure 2, for example). The plug-in nipple 3 is not shown for reasons of greater clarity.

The locking element 36 is designed symmetrically and has a spring arm 42 on both sides. A notch 43 is present at the ends of the spring arms 42; it interacts positively with a projection 44 of the coupling sleeve 1. In order to fix the plug-in nipple 3 (not shown) in the radial direction also, the locking element 36 has two hold-down devices 45. The hold-down devices 45 are also springy just as the spring arms 42 so that the plug-in nipple is pressed on the side of the recess 7 opposite the locking element 36 when the locking element 36 is locked in place. The resulting radial bracing of the notches 43 of the locking element 36 and the projections 44 of the coupling sleeve 1 also prevent an unintentional opening of the quick coupling.

When the spring arms 42 are moved toward each other, the notches 43 move away from the projections 44 so that the locking element can be removed upward from the cutout 33. The quick coupling according to the invention can thus be released.

## Claims

1. Quick coupling for hoses or pipelines with a coupling sleeve (1) having a first passage borehole (9), with a plug-in nipple (3) having a second passage borehole (18) with at least one sealing element (21) located in the first passage borehole (9), wherein the plug-in nipple (3) penetrates the sealing element (21) in the coupled state of the quick coupling, with a locking element (36) that has means (37) that interact with the plug-in nipple (3) or a pressure sleeve (23) for creating a tensioning of the sealing element or elements (21) by compressing the sealing element (21) in the axial direction (s3) in the coupled state of the quick coupling, with a pressure sleeve (23) being located between the sealing element (21) and the plug-in nipple (3) wherein the pressure sleeve (23) transfers the tensioning force between the plug-in nipple (3) and the sealing element (21), wherein the plug-in nipple (3) has a collar (27) that interacts with the pressure sleeve (23) during transfer of the tensioning force, **characterized in that** the sleeve (23) comprises a circular elevation or lug (39) that corresponds in the coupled state of the quick coupling with a recess (41) of the locking element (36) to fix the locking element (36) and the plug-in nipple (3) in their end positions.

2. Quick coupling according to Claim 1, **characterized in that** the pressure sleeve (23) has a collar (25) that interacts with an offset (31) of the first passage borehole (9).

3. Quick coupling according to one of the preceding claims, **characterized in that** the means (37) for creating the tensioning of the sealing element or elements (21) are comprised of an inclined plane.

4. Quick coupling according to one of the preceding claims, **characterized in that** the sealing element (21) is an O-ring.

5. Quick coupling according to one of the claims 1 to 3, **characterized in that** the sealing element (21) has an essentially rectangular or square cross section.

6. Quick coupling according to Claim 5, **characterized in that** the sealing element (21) has at least one peripheral groove (35) on its outer surface and/or its inner surface.

7. Quick coupling according to one of the preceding claims, **characterized in that** the sealing element (21) and the pressure sleeve (23) are made in one piece.

8. Quick coupling according to one of Claims 1-6, **characterized in that** at least two sealing elements (21) located one after the other in the axial direction of the first passage borehole (9) are provided and that a thrust ring is provided between each of the sealing elements (21).

9. Quick coupling according to one of the preceding claims, **characterized in that** the sealing element (21) is a four-lipped sealing ring or a multi-lipped sealing ring.

## Patentansprüche

1. Schnellkupplung für Schläuche oder Rohrleitungen mit einer Kupplungsbuchse (1), die eine erste Durchgangsbohrung (9) hat, mit einem Einstecknippel (3), der eine zweite Durchgangsbohrung (18) hat, mit mindestens einem in der ersten Durchgangsbohrung (9) angeordneten Dichtelement (21), wobei der Einstecknippel (3) in dem zusammengekuppelten Zustand der Schnellkupplung in das Dichtelement (21) eindringt, mit einem Verriegelungselement (36), das eine Einrichtung (37) hat, die mit dem Einstecknippel (3) oder einer Druckbuchse (23) zusammenwirkt, um eine Spannung des Dichtelements bzw. der Dichtelemente (21) durch Zusammendrücken des Dichtelements (21) in axialer Richtung (s3) im zusammengekuppelten Zustand der Schnellkupplung zu erzeugen, mit einer Druckbuchse (23), die zwischen dem Dichtelement (21) und dem Einstecknippel (3) angeordnet ist, wobei die Druckbuchse (23) die Spannkraft zwischen dem Einstecknippel (3) und dem Dichtelement (21) überträgt, wobei der Einstecknippel (3) einen Kragen (27) hat, der mit der Druckbuchse (23) während der Übertragung der Spannkraft zusammenwirkt,
**dadurch gekennzeichnet, dass** die Buchse (23) eine kreisförmige Erhöhung bzw. einen Ansatz (39) hat, der im zusammengekuppelten Zustand der Schnellkupplung mit einer Ausnehmung (41) des Verriegelungselements (36) übereinstimmt, um das Verriegelungselement (36) und den Einstecknippel (3) in ihren Endpositionen zu fixieren.

2. Schnellkupplung nach Anspruch 1,
**dadurch gekennzeichnet, dass** die Druckbuchse (23) einen Kragen (25) hat, der mit einem Absatz (31) der ersten Durchgangsbohrung (9) zusammenwirkt.

3. Schnellkupplung nach einem der vorstehenden Ansprüche,
**dadurch gekennzeichnet, dass** die Einrichtung (37) zum Erzeugen der Spannung des Dichtelements bzw. der Dichtelemente (21) eine geneigte Ebene umfasst.

4. Schnellkupplung nach einem der vorstehenden Ansprüche,
**dadurch gekennzeichnet, dass** das Dichtelement (21) ein O-Ring ist.

5. Schnellkupplung nach einem der Ansprüche 1 bis 3,
**dadurch gekennzeichnet, dass** das Dichtelement (21) einen im wesentlichen rechteckigen oder quadratischen Querschnitt hat.

6. Schnellkupplung nach Anspruch 5,
**dadurch gekennzeichnet, dass** das Dichtelement (21) mindestens eine Umfangsnut (35) an seiner äußeren Oberfläche und/oder seiner inneren Oberfläche hat.

7. Schnellkupplung nach einem der vorstehenden Ansprüche,
**dadurch gekennzeichnet, dass** das Dichtelement (21) und die Druckbuchse (23) in einem Stück ausgeführt sind.

8. Schnellkupplung nach einem der Ansprüche 1-6,
**dadurch gekennzeichnet, dass** mindestens zwei Dichtelemente (21) nacheinander in axialer Richtung der ersten Durchgangsbohrung (9) vorgesehen sind und das ein Druckring zwischen den jeweiligen Dichtelementen (21) vorgesehen ist.

9. Schnellkupplung nach einem der vorstehenden Ansprüche,
**dadurch gekennzeichnet, dass** das Dichtelement (21) ein Dichtring mit vier Lippen oder einen Dichtring mit mehreren Lippen ist.

## Revendications

1. Raccord rapide pour tuyaux ou tubes comprenant un fourreau de raccord (1) ayant un premier trou de passage (9), avec un manchon à emboîter (3) ayant un second trou de passage (18) avec au moins un élément d'étanchement (21) placé dans le premier trou de passage (9), dans lequel le manchon à emboîter (3) pénètre dans l'élément d'étanchement (21) dans l'état accouplé du raccord rapide, avec un élément de blocage (36) qui possède des moyens (37) qui coopèrent avec le manchon à emboîter (3) ou avec un fourreau à pression (23) pour créer un tensionnement de l'élément ou des éléments d'étanchement (21) par compression de l'élément d'étanchement (21) dans la direction axiale (s3) dans l'état accouplé du raccord rapide, avec un fourreau à pression (23) mis en place entre l'élément d'étanchement (21) et le manchon à emboîter (3), dans lequel le fourreau à pression (23) transfère la force de tensionnement entre le manchon à emboîter (3) et l'élément d'étanchement (21), dans lequel le manchon à emboîter (3) possède un collier (27) qui coopère avec le fourreau à pression (23) pendant le transfert de la force de tensionnement, **caractérisé en ce que** le fourreau (23) comprend une élévation ou une patte circulaire (39) qui correspond, dans l'état accouplé du raccord rapide, à un évidement (41) de l'élément de blocage (36) pour fixer l'élément de blocage (36) et le manchon à emboîter (3) dans leurs positions finales.

2. Raccord rapide selon la revendication 1, **caractérisé en ce que** le fourreau à pression (23) comprend un collier (25) qui coopère avec une partie décalée (31) du premier trou de passage (9).

3. Raccord rapide selon l'une des revendications précédentes, **caractérisé en ce que** les moyens (37) pour créer le tensionnement de l'élément ou des éléments d'étanchement (21) sont constitués par un plan incliné.

4. Raccord rapide selon l'une des revendications précédentes, **caractérisé en ce que** l'élément d'étanchement (21) est un joint torique.

5. Raccord rapide selon l'une des revendications 1 à 3, **caractérisé en ce que** l'élément d'étanchement (21) a une section transversale essentiellement rectangulaire ou carrée.

6. Raccord rapide selon la revendication 5, **caractérisé en ce que** l'élément d'étanchement (21) comporte au moins une gorge périphérique (35) sur sa surface extérieure et/ou sa surface intérieure.

7. Raccord rapide selon l'une des revendications précédentes, **caractérisé en ce que** l'élément d'étanchement (21) et le fourreau à pression (23) sont réalisés d'une seule pièce.

8. Raccord rapide selon l'une des revendications 1 à 6, **caractérisé en ce qu'**il est prévu au moins deux éléments d'étanchement (21) placés l'un après l'autre dans la direction axiale du premier trou de passage (9), et **en ce qu'**il est prévu une bague de poussée entre chacun des éléments d'étanchement (21).

9. Raccord rapide selon l'une des revendications précédentes, **caractérisé en ce que** l'élément d'étanchement (21) est une bague d'étanchement à quatre lèvres, ou une bague d'étanchement à lèvres multiples.
